# EUROPÄISCHE PATENTSCHRIFT

(11) **EP 3 224 696 B1**
(45) Veröffentlichungstag und Bekanntmachung des Hinweises auf die Patenterteilung: **15.07.2020**
(21) Anmeldenummer: 15771555.8
(22) Anmeldetag: 22.09.2015
(51) Int. Cl.: G06F 3/01, G06F 3/041, G06F 3/0354

(54) **VERFAHREN ZUR TAKTILEN INTERAKTION EINES BENUTZERS MIT EINEM ELEKTRONISCHEN GERÄT UND ELEKTRONISCHES GERÄT HIERZU**
METHOD FOR TACTILE USER INTERACTION WITH AN ELECTRONIC DEVICE, AND AN ELECTRONIC DEVICE FOR SAME
PROCÉDÉ PERMETTANT L'INTERACTION TACTILE ENTRE UN UTILISATEUR ET UN APPAREIL ÉLECTRONIQUE, ET APPAREIL ÉLECTRONIQUE ASSOCIÉ

(30) Priorität: 26.11.2014 DE 102014224102
(43) Veröffentlichungstag der Anmeldung: 04.10.2017
(73) Patentinhaber: Robert Bosch GmbH, 70442 Stuttgart (DE)
(72) Erfinder: HERMANNS, Ingo, 31134 Hildesheim (DE); FREITAG, Thomas, 31191 Algermissen (DE)
(86) Internationale Anmeldenummer: PCT/EP2015/071659
(87) Internationale Veröffentlichungsnummer: WO 2016/082966

(56) Entgegenhaltungen:
- DE-U1- 20 180 024
- US-A1- 2013 285 910
- US-A1- 2014 062 927

## Beschreibung

Die Erfindung betrifft ein Verfahren zur taktilen Interaktion eines Benutzers mit einem elektronischen Gerät und die Erfindung betrifft ein elektronisches Gerät zur Ausführung des Verfahrens, beispielsweise ein Smartphone, ein Tablet-PC, ein Navigationsgerät, ein Autoradiogerät oder eine Spielekonsole, aufweisend einen Prozessor zur Datenverarbeitung und aufweisend eine berührungsempfindliche Bedienoberfläche, wobei das Gerät eine Vibrationseinrichtung zur Erzeugung einer Vibration aufweist, und wobei die Bedienoberfläche mit einer Abtasteinrichtung zur Erzeugung eines Abtastsignals in Abhängigkeit einer Position einer Berührung auf der Bedienoberfläche ausgebildet ist.

### STAND DER TECHNIK

Neben in Hardware ausgeführten Bedienelementen, wie beispielsweise Druckschalter, Dreh- oder Schieberegler verfügen elektronische Geräte zu ihrer Bedienung häufig auch über mechanikfreie, berührungsempfindliche Bedienoberflächen, wie beispielsweise sogenannte Touchpads bei Smartphones oder Tablet-PCs. Hardware-Bedienelemente wie auch berührungsempfindliche Bedienoberflächen können kontextabhängig verschiedenen Bedienfunktionen in einem Bedienbereich zugeordnet werden. Darüber hinaus können die Bedienoberflächen auch in kontextabhängig variierende Teilbereiche untergliedert sein. Letzteres ist beispielsweise bei Smartphones bekannt, bei denen üblicherweise eine berührungsempfindliche Bedienoberfläche als Bedieneinrichtung vorgesehen ist, wobei je nach aktiver Funktion voneinander verschiedene und verschieden große Teilbereiche der Bedienoberfläche zur Bedienung verfügbar sind. Die Bedienoberfläche ist zur Erfassung der Berührung mit einer Abtasteinrichtung ausgeführt, und bei Sensierung einer Berührung wird ein Abtastsignal abhängig von der Position der Berührung auf der Bedienoberfläche erzeugt.

Die Bedienoberflächen sind zugleich als Displays ausgeführt und zeigen den Bedienbereich visuell an, so dass ein Benutzer aufgrund der visuellen Information die Berührung und damit die Funktion steuern kann. Typischerweise dienen diese Bedienbereiche, häufig als Icons oder Softkeys bezeichnet, zur taktilen Benutzung und weisen Größen auf, die etwa der Größe einer Fingerkuppe entspricht. Solche Bedieneinrichtungen sind beispielsweise in der EP 1964022 B1 oder in der EP 2126678 B1 beschrieben.

Touchpads, beispielsweise für Laptops, verfügen teilweise über abgesetzte Bereiche, wie etwa eine seitliche Scrollleiste, die durch eine vom Rest der Bedienoberfläche abweichende Oberflächenstruktur gekennzeichnet ist und damit eine haptische Orientierung erleichtert. Diese abweichende Oberflächenstruktur erstreckt sich über einen fest vorgegebenen Bereich und ist im Betrieb unveränderlich. Oberflächen von Smartphones oder Tablet-PCs sind aber üblicherweise glatt und hinsichtlich ihrer, Oberflächenstruktur während des Gebrauchs unveränderlich. Eine Orientierung auf den bekannten Bedienoberflächen ist daher ohne Sichtkontakt nicht möglich, so dass eine taktile Interaktion zwischen einem Benutzer und dem elektronischen Gerät wünschenswert wäre.

Die DE 21 2012 000 106 U1 beschreibt ein mobiles elektronisches Gerät mit einer Vibrationseinrichtung zur Erzeugung einer Vibration. Dabei wird ein System zum Erstellen benutzerdefinierter Vibrationsmuster beschrieben, welche durch das mobile elektronische Gerät wiedergegeben werden können.

In der US 2014/0062927A1 wird ein Verfahren zur taktilen Interaktion eines Benutzers mit einem elektronischen Gerät beschrieben.

Die DE 201 80 024 U1 betrifft eine Berührungssteuerung mit haptischer Rückkopplung zur Eingabe von Signalen in einen Computer und zur Ausgabe von Kräften an einen Benutzer der Berührungssteuerung.

In der US 2013/0285910A1 wird ein elektronisches Gerät mit einer berührungsempfindlichen Bedienoberfläche und einer Vibrationseinrichtung beschrieben. Dabei ist vorgesehen, dass die Vibration in Abhängigkeit der Bewegungsgeschwindigkeit des Benutzers geändert werden kann.

### OFFENBARUNG DER ERFINDUNG

Aufgabe der Erfindung ist die Weiterbildung eines Verfahrens zur taktilen Interaktion eines Benutzers mit einem elektronischen Gerät, bei dem die Interaktion eines Benutzers mit dem elektronischen Gerät basierend auf einem taktilen Auffinden und einer taktilen Wahrnehmung einer Funktion durch den Benutzer erweitert wird. Insbesondere soll das Auffinden einer Position beziehungsweise eines Bedienbereichs, beispielsweise eines Icons oder Softkeys auf der Bedienoberfläche mit Hilfe einer taktile Wahrnehmung erleichtert werden.

Diese Aufgabe wird ausgehend von einem Verfahren zur taktilen Interaktion eines Benutzers mit einem elektronischen Gerät gemäß dem Oberbegriff des Anspruches 1 sowie ausgehend von einem elektronischen Gerät gemäß Anspruch 12 mit den jeweils kennzeichnenden Merkmalen gelöst. Vorteilhafte Weiterbildungen der Erfindung sind in den abhängigen Ansprüchen angegeben.

Die Erfindung sieht vor, dass eine Vibration wenigstens in der Bedienoberfläche in Abhängigkeit einer Geschwindigkeit einer Positionsänderung der Berührung auf der Bedienoberfläche erzeugt wird, wobei die Geschwindigkeit der Positionsänderung der Berührung auf der Bedienoberfläche dadurch erfasst wird, dass eine erste Position zu einem ersten Zeitpunkt und eine zweite Position zu einem zweiten Zeitpunkt mit der Abtasteinrichtung unter Erzeugung des Abtastsignals bestimmt wird.

Das besondere bei dem Verfahren ist, dass Folgen von Vibrationspulsen erzeugt werden, und die Intervalldauer zwischen den einzelnen Vibrationspulsen wird durch die Bewegungsgeschwindigkeit des Fingers auf der Bedienoberfläche bestimmt. Dazu wird die Bewegungsgeschwindigkeit der Position der Berührung, beispielsweise eines Fingers, fortlaufend aus den Positionsdaten ermittelt.

Durch die erfindungsgemäße Weiterbildung eines Verfahrens zur taktilen Interaktion eines Benutzers mit einem elektronischen Gerät wird die Bedienung des Gerätes ohne Blickzuwendung des Benutzers auf die Bedienoberfläche möglich gemacht bzw. erleichtert. Dieses wird durch eine haptische Rückmeldung des Gerätes an den Benutzer durch eine Vibration erreicht, die nicht ausschließlich positionsabhängig ist, sondern die von der Geschwindigkeit der Berührung auf der Bedienoberfläche abhängig ist. Die Berührung kann beispielsweise durch einen Kontakt eines Fingers des Benutzers mit der Bedienoberfläche erzeugt werden, wobei es auch denkbar ist, das Verfahren mit Verwendung eines Eingabestiftes auszuführen, der in der Hand des Benutzers geführt wird.

Die erreichten Vorteile der nicht visuellen, taktilen Interaktion eines Benutzers mit einem elektronischen Gerät liegen beispielsweise darin begründet, dass Eingabeversuche durch eine Betätigung inaktiver Areale der Bedienoberfläche vermieden werden, und eine visuelle Ablenkungsgefahr insbesondere bei automotiven Produkten wird reduziert. Die Eingaben über die Bedienoberflächen durch taktile Interaktion werden intuitiver, und die Bedienbarkeit der Geräte kann auch in rauer Umgebung verbessert werden. Beispielsweise kann eine Bedienung bei Dunkelheit erfolgen, oder die Bedienung des elektronischen Gerätes, beispielsweise ein Smartphone, kann durch einen Benutzer ohne einen Blickkontakt herstellen zu können, in einer Tasche erfolgen, beispielsweise um ein Klingelsignal zu deaktivieren.

Die Vibration kann nur in der Bedienoberfläche, insbesondere jedoch auch im gesamten Gerät erzeugt werden. Die Vibration sollte dabei derart ausgebildet sein, dass diese taktil mit dem Finger des Benutzers erkannt werden kann.

Bei einer zügigen Fingerbewegung entsteht eine sehr schnelle Änderung der Position der Berührung auf der Bedienoberfläche, so dass eine schnelle Signalfolge aus Einzelpulsen mit veränderlichen Zeitabständen folgt. Beim Innehalten der Bewegung findet dabei jedoch keine Vibration statt. Unter diesem Aspekt wird in der Praxis die Feinheit der virtuellen Textur durch die Verarbeitungsgeschwindigkeit des Prozessors zur Datenverarbeitung im elektronischen Gerät begrenzt.

Um diesem Problem zu begegnen, ist erfindungsgemäß vorgesehen, dass nach Ermittlung der Bewegungsgeschwindigkeit, beispielsweise eines Fingers über der Bedienoberfläche, der ermittelte Geschwindigkeitswert durch Multiplikation mit einem vorgegebenen Faktor und Kehrwertbildung in eine Intervalldauer umgewandelt wird. Über diesen Faktor oder über eine feste tabellarische Zuordnung wird die Feinheit oder die Grobheit der virtuellen Textur bestimmt.

Der Faktor kann konstant oder auch von der Bewegungsgeschwindigkeit abhängig sein.

Die Dauer zwischen den Zeitpunkten, also beispielsweise ein erster Zeitpunkt und ein zweiter Zeitpunkt, wird vorzugsweise durch eine Abtastzeitkonstante gebildet, so dass zu festen Zeitpunkten T1 und T2 eine erste Position und eine zweite Position ermittelt und diesen Zeitpunkten zugeordnet wird. Der Abstand zwischen den beiden Positionen zu den beiden Zeitpunkten wird dividiert durch die Zeitdifferenz zwischen den beiden Zeitpunkten. Anschließend wird der Betrag gebildet. Die zweite Position zum Zweiten Zeitpunkt wird dabei gespeichert, und bildet wieder die erste Position zum ersten Zeitpunkt einer nachfolgenden Erfassung und je nach gewünschter virtueller Textur werden verschiedene Methoden der Abstandsberechnung genutzt.

Der Vorteil ist eine niedrige erforderliche Prozessorleistung, und auch bei einer schnellen Bewegungsgeschwindigkeit beispielsweise eines Fingers über der Bedienoberfläche kann das benötigte Vibrationssignal in der gefordert hohen Frequenz ausgegeben werden.

Die Taktung zwischen dem ersten Zeitpunkt und dem zweiten Zeitpunkt beträgt 10 Millisekunden bis 30 Millisekunden, vorzugsweise 15 Millisekunden bis 25 Millisekunden und besonders bevorzugt 20 Millisekunden, so dass die erforderliche Prozessorleistung entsprechend niedrig ausfällt, die Taktung ist damit jedoch hinreichend hoch, um für die virtuelle Textur noch eine genügend große Auflösung zu erreichen, so dass durch die Auflösung die taktile Wahrnehmung eines Benutzers zur Interaktion mit dem elektronischen Gerät nicht beeinträchtigt ist.

Die so gewonnene Signalfolge wird kontinuierlich während der gewählten Intervallzeit, also beispielsweise 20 Millisekunden, mit konstanten Puls- und Pauseintervallen auf die Vibrationseinrichtung ausgegeben, bis ein neuer Geschwindigkeitswert vorliegt.

Vorteilhafterweise ist auf der Bedienoberfläche wenigstens ein Bedienbereich, beispielsweise eine Schaltfläche, eine Grafik, ein Muster oder dergleichen, definiert, wobei die Vibration in Abhängigkeit des wenigstens einen Bedienbereiches erzeugt wird. Verfährt der Benutzer den Finger über der Bedienoberfläche, so wird in Abhängigkeit des Bedienbereiches, dem eine Funktion hinterlegt sein kann, die Vibration erzeugt. So kann beispielsweise bereits nur durch die Information, die durch die Vibration erzeugt wird, das Auffinden eines bestimmten, zur Bedienung der Funktion des Gerätes aktivierten Teilbereiches innerhalb der Bedienoberfläche ermöglicht werden, also beispielsweise einer bestimmten Teilfläche der Bedienoberfläche, welche im aktuellen Kontext einen Schalter oder einen Dreh- oder Schieberegler simuliert.

Bevorzugterweise wird die Vibration nur erzeugt, falls der Benutzer die Position der Berührung auf der Bedienoberfläche innerhalb des mindestens einen Bedienbereichs ändert. Hierdurch kann dem Benutzer beim Verfahren seines Fingers über der Bedienoberfläche auch ohne Blickkontakt mit der Bedienoberfläche eine Information bereitgestellt werden, ob sich die Berührung bereits über einem gewünschten Bedienbereich auf der Bedienoberfläche befindet. Folglich ist eine Art von Navigation des Fingers über der Bedienoberfläche basierend auf einer wahrnehmbaren Vibration ermöglicht.

Nach einer vorteilhaften Ausführungsvariante der Erfindung kann die Frequenz der Vibration in Abhängigkeit der Geschwindigkeit verändert werden, mit der der Benutzer die Position der Berührung auf der Bedienoberfläche ändert. Durch die virtuelle Textur kann dem Benutzer beim Verfahren seines Fingers über der Bedienoberfläche auch ohne Blickkontakt mit der Bedienoberfläche eine Information bereitgestellt werden, ob sich die Berührung bereits über einen gewünschten Bedienbereich auf der Bedienoberfläche befindet. Über die Feinheit/Grobheit der Textur lassen sich mehrere Bedienbereiche auf der Bedienoberfläche voneinander unterscheiden.

Die Pulsform der Pulsfolge kann beispielsweise dreieckig, sinusförmig, halbsinusförmig ausgeführt sein oder eine Kombination aus den Formen aufweisen, wobei beliebig vordefinierte Pulsformen insbesondere abhängig von der zugeordneten Funktion bereitgestellt werden können, oder es kann sogar eine Pulsform mit einer entsprechenden Frequenzfolge erzeugt werden, die ein haptisches Bedienerlebnis eines mechanischen Schalters nachbildet. Diese Nachbildung kann insbesondere durch Schiebeschalter, Drehschalter, sogenannte Jog Dials, oder beispielsweise Kippschalter realisiert werden. Besonders bevorzugterweise ist eine rechteckförmige Pulsform vorgesehen. Rechteckpulse bieten erfahrungsgemäß eine besondere Wahrnehmbarkeit sowie eine einfache technische Realisierbarkeit.

Durch die Geschwindigkeitsabhängigkeit des Verfahrens kann die sensorische Rückmeldung sehr intuitiv beeinflusst werden, und virtuelle Bedientasten oder Bedienelemente sind auf der Bedienoberfläche leicht auffindbar und über unterschiedliche virtuelle Texturen voneinander unterscheidbar. Dabei können mehrere separate Bedienbereiche definiert werden, beispielsweise Schaltflächen oder Informationsflächen, wobei die Vibration immer in Abhängigkeit des wenigsten einen Bedienbereiches erzeugt wird. Somit sind besonders bevorzugterweise auf der Bedienoberfläche mindestens zwei voneinander beabstandete Bedienbereiche vorgesehen, wobei aus jedem der mindestens beiden Bedienbereiche eine unterschiedliche Textur abgeleitet wird.

Der Bedienbereich auf der Bedienoberfläche des elektronischen Geräts weist vorzugsweise eine Längsrichtung und eine Querrichtung auf. Bevorzugterweise kann die Vibration in getrennter Abhängigkeit von der Bewegung der Berührung in Längsrichtung oder in Querrichtung ausgegeben werden. Desweiteren könnte die Vibration in beliebiger Richtung ausgegeben werden, wobei vektorielle X/Y-Anteile ausgewertet werden.

Zur Berechnung der Geschwindigkeit wird ausschließlich die Distanz in Längs- und/oder Querrichtung verwendet. Beispielsweise wird bei Fingerbewegung in Längsrichtung über eine ausschließlich in Querrichtung angeordnete Textur keine Vibration ausgegeben. Wird der Finger hingegen in Querrichtung bewegt, ist eine Textur fühlbar.

Die Erfindung bezieht sich weiterhin auf ein elektronisches Gerät zur Ausführung eines Verfahrens zur taktilen Interaktion eines Benutzers mit dem elektronischen Gerät, beispielsweise ein Smartphone oder ein Tablet-PC, aufweisend wenigstens einen Prozessor zur Datenverarbeitung und aufweisend eine berührungsempfindliche Bedienoberfläche, wobei das Gerät eine Vibrationseinrichtung zur Erzeugung einer Vibration aufweist, und wobei die Bedienoberfläche mit einer Abtasteinrichtung zur Erzeugung eines Abtastsignals in Abhängigkeit einer Position einer Berührung auf der Bedienoberfläche ausgebildet ist, und wobei vorgesehen ist, dass eine Vibration wenigstens in der Bedienoberfläche in Abhängigkeit einer Geschwindigkeit einer Positionsänderung der Berührung auf der Bedienoberfläche erzeugt wird, wobei die Geschwindigkeit der Positionsänderung der Berührung auf der Bedienoberfläche dadurch erfasst wird, dass eine erste Position zu einem ersten Zeitpunkt und eine zweite Position zu einem zweiten Zeitpunkt mit der Abtasteinrichtung unter Erzeugung des Abtastsignals bestimmt wird.

Zur Bildung der Vibrationseinrichtung ist es denkbar, einen Exzentermotor im elektronischen Gerät zu verwenden, wobei lediglich die Motorspannung durch die Fingergeschwindigkeit gesteuert bzw. ein- und ausgeschaltet werden muss. Dadurch wird eine besonders ökonomische Lösung dargestellt.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: ein Ausschnitt eines elektronischen Geräts mit Bedienoberfläche und einem Bedienbereich mit virtueller Textur,
- Fig. 2: ein Diagramm mit einer Signalfolge von Vibrationspulsen über der Zeit t, und
- Fig. 3: eine Tabelle.

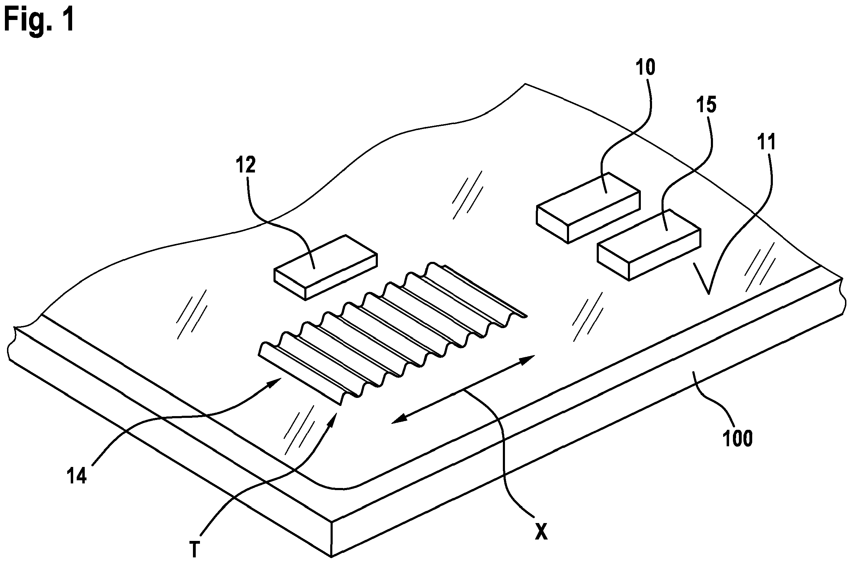

Fig. 1 zeigt abschnittsweise ein elektronisches Gerät 100 mit einer Bedienoberfläche 11, auf der die in einem Bedienbereich 14 vorgesehene virtuelle Textur T taktil erfasst werden soll. Das elektronische Gerät 100, das abschnittsweise dargestellt ist, kann beispielsweise ein Smartphone oder ein Tablet-PC sein, und die Bedienoberfläche 11 kann in Form eines visuellen Displays ausgeführt sein.

Das elektronische Gerät 100 weist einen Prozessor 10 zur Datenverarbeitung auf, ferner umfasst das elektronische Gerät 100 eine Vibrationseinrichtung 12 zur Erzeugung einer Vibration, wobei die Vibration wenigstens in der Bedienoberfläche 11, insbesondere jedoch im gesamten Gerät 100, erzeugt werden soll. Zusätzlich umfasst das elektronische Gerät 100 gemäß dem gezeigten Ausführungsbeispiel einen Speicher 15 zur Speicherung der Messdaten aus der Bewegungsgeschwindigkeitsermittlung. Desweiteren können im Speicher 15 Faktoren zur Ermittlung von Intervallzeiten basierend auf den Messdaten aus den ermittelten Bewegungsgeschwindigkeitswerten abgelegt sein.

Die beispielhaft gezeigte virtuelle Textur T in Form des Wellenprofils erstreckt sich in einer X-Richtung, so dass bei einem Überstreichen mit dem Finger 16 in X-Richtung das Wellenprofil wahrnehmbar ist und bei einem Überstreichen mit dem Finger 16 in der Y-Richtung ist auf der Bedienoberfläche 11 keine Veränderung wahrzunehmen. Das Wellenprofil ist folglich nur in X-Richtung in seiner Struktur veränderlich, so dass auch nur bei einer Bewegung des Fingers 16 in X-Richtung eine Vibration ausgegeben werden soll, hingegen wird bei einer Bewegung des Fingers 16 in Y-Richtung keine Vibration ausgegeben.

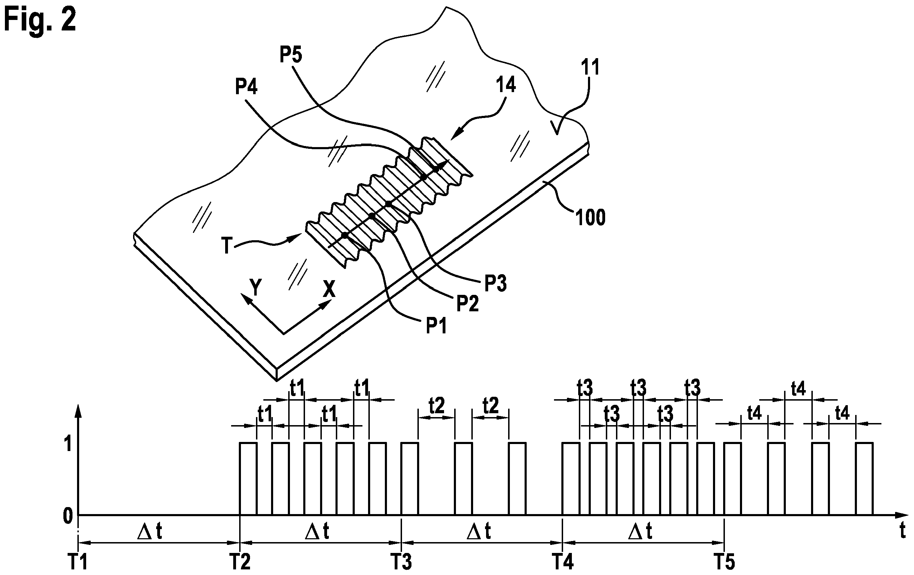

Fig. 2 zeigt eine Signalfolge von Vibrationspulsen 13 über der Zeit t, wobei die Vibrationspulse 13 dargestellt sind durch eine Zustandsänderung vom Zustand 0 auf den Zustand 1.

Über dem Diagramm ist das elektronische Gerät 100 mit der Bedienoberfläche 11 und einem Bedienbereich 14 gezeigt, in dem sich eine Textur T befindet. Innerhalb des Bedienbereiches 14 ist ein beispielhafter Weg gezeigt, der mit einem Finger abgefahren werden kann, so dass sich über dem gezeigten Weg die Position der Berührung auf der Bedienoberfläche mit einer bestimmten Geschwindigkeit ändert. Die Bewegung beginnt mit der Position P1 und verfährt in X-Richtung über der Textur T bis zur Position P2. Im Diagramm ist der Zeitpunkt, welcher der Position P1 zugeordnet ist, mit T1 gekennzeichnet. Der Zeitpunkt, welcher der Position P2 zugeordnet ist, ist mit T2 gekennzeichnet. Die Zeitdauer von T1 bis T2, also das Verfahren der Position P1 nach P2, ist mit Δt gekennzeichnet. Die Bewegungsgeschwindigkeit des Fingers kann fortlaufend aus den Positionsdaten ermittelt werden. Hierfür wird der Abstand zwischen der Position P1 zum Zeitpunkt T1 und der Position P2 zum Zeitpunkt T2 durch die Zeitdifferenz zwischen T1 und T2 dividiert. Anschließend wird der Betrag gebildet. Die Position P2 und der dieser Position zugeordnete Zeitpunkt T2 werden im Speicher 15 abgelegt.

Je nach gewünschter Textur können verschiedene Methoden zur Abstandsberechnung benutzt werden. Beispielsweise können nur die Anteile der Abstände in Längs- oder Querrichtung verwendet werden. Für eine kreuzförmige Textur können auch beide Anteile der Distanzen beziehungsweise Abstände ermittelt und verwendet werden.

Mittels einer im Speicher 15 abgelegten Tabelle oder durch Multiplikation mit einem festen Faktor wird ein ermittelter Geschwindigkeitswert in eine Intervalldauer für die von der Vibrationseinrichtung 12 auszugebenen Vibrationspulse 13 umgewandelt.

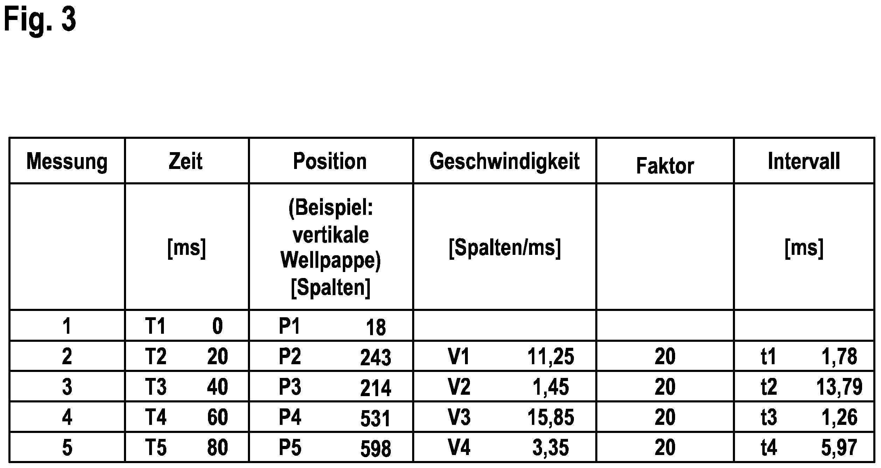

Ein Beispiel für eine solche Tabelle ist in Figur 3 gezeigt. Über den Faktor oder die Tabelle wird die Feinheit beziehungsweise Grobheit der Textur bestimmt. Am Beispiel der Fingerbewegung aus Figur 2 wird basierend auf der Tabelle aus Figur 3 zuerst der Geschwindigkeitswert V1 und daraus die Intervalldauer t1 ermittelt. Die gewonnene Signalfolge für die Vibrationspulse 13 wird auf dem Aktuator ausgegeben bis ein neuer Geschwindigkeitswert, in diesem Beispiel V2, vorliegt. Die nächste Geschwindigkeitsmessung wird unmittelbar anschließend gestartet. Hierfür muss nur ein einziger Positionswert P3 ermittelt werden, da P2 als Vergleichswert bereits im Speicher 15 zur Verfügung steht. Aus P2, T2, P3 und T3 wird dann der nächste Geschwindigkeitswert V2 und daraus die Intervalldauer t2 berechnet. Dann wird die neu gewonnene Signalfolge für die Vibrationspulse 13 auf dem Aktuator ausgegeben bis ein weiterer Geschwindigkeitswert, in diesem Beispiel V3, vorliegt.

Es hat sich als vorteilhaft erwiesen, die Bewegungsgeschwindigkeit etwa alle 20 ms zu messen. In dem Beispiel gemäß Figuren 2 und 3 ist der Faktor konstant.

Der Faktor könnte aber auch vom ermittelten Geschwindigkeitswert abhängen und somit variabel sein. Im Speicher 15 wäre dann eine Formel zur Berechnung des Faktors basierend auf dem ermittelten Geschwindigkeitswert abgelegt.

Vorteilhafterweise sind hierfür auch Unter- und Obergrenzen für den Faktor im Speicher 15 abgelegt.

## Patentansprüche

1. Verfahren zur taktilen Interaktion eines Benutzers mit einem elektronischen Gerät (100), beispielsweise ein Smartphone oder ein Tablet-PC, aufweisend wenigstens einen Prozessor (10) zur Datenverarbeitung und aufweisend eine berührungsempfindliche Bedienoberfläche (11), wobei das Gerät (100) eine Vibrationseinrichtung (12) zur Erzeugung einer Vibration aufweist, und wobei die Bedienoberfläche (11) mit einer Abtasteinrichtung zur Erzeugung eines Abtastsignals in Abhängigkeit einer Position einer Berührung auf der Bedienoberfläche (11) ausgebildet ist, wobei
eine Vibration wenigstens in der Bedienoberfläche (11) in Abhängigkeit einer Geschwindigkeit einer Positionsänderung der Berührung auf der Bedienoberfläche (11) erzeugt wird, wobei die Geschwindigkeit der Positionsänderung der Berührung auf der Bedienoberfläche (11) dadurch erfasst wird, dass eine erste Position (P1) zu einem ersten Zeitpunkt (T1) und eine zweite Position (P2) zu einem zweiten Zeitpunkt (T2) mit der Abtasteinrichtung unter Erzeugung des Abtastsignals bestimmt wird,
**dadurch gekennzeichnet, dass** ein ermittelter Wert für die Geschwindigkeit der Positionsänderung mit einem vorgegebenen Faktor multipliziert wird und anschließend durch Kehrwertbildung in eine Intervalldauer umgewandelt wird, wobei
die Taktung zwischen dem ersten Zeitpunkt (T1) und dem zweiten Zeitpunkt (T2) 10 Millisekunden bis 30 Millisekunden, vorzugsweise 15 Millisekunden bis 25 Millisekunden und besonders bevorzugt 20 Millisekunden beträgt.

2. Verfahren nach Anspruch 1, **dadurch gekennzeichnet, dass** die Dauer zwischen den Zeitpunkten (T1, T2) durch eine Abtastzeitkonstante gebildet wird, sodass zu festen Zeitpunkten (T1, T2) eine Position (P1, P2) ermittelt und diesen Zeitpunkten zugeordnet wird.

3. Verfahren nach Anspruch 1 oder 2, **dadurch gekennzeichnet, dass** das elektronische Gerät (100) einen elektronischen Speicher (15) aufweist, wobei wenigstens eine Position (P1, P2) zu einem Zeitpunkt (T1, T2) im Speicher (15) abgelegt wird.

4. Verfahren nach einem der vorgenannten Ansprüche, **dadurch gekennzeichnet, dass** die Frequenz der Vibration in Abhängigkeit der Geschwindigkeit der Positionsänderung der Berührung verändert wird.

5. Verfahren nach einem der vorgenannten Ansprüche, **dadurch gekennzeichnet, dass** auf der Bedienoberfläche (11) wenigstens ein Bedienbereich (14) definiert wird, beispielsweise eine Schaltfläche, eine Grafik, ein Muster oder dergleichen, wobei die Vibration in Abhängigkeit des wenigstens einen Bedienbereiches (14) erzeugt wird.

6. Verfahren nach Anspruch 5, **dadurch gekennzeichnet, dass** die Vibration nur erzeugt wird, falls der Benutzer die Position der Berührung auf der Bedienoberfläche (11) innerhalb des mindestens einen Bedienbereichs (14) ändert.

7. Verfahren nach einem der Ansprüche 5 oder 6, **dadurch gekennzeichnet, dass** durch die Vibrationspulse (13) eine taktil wahrnehmbare virtuelle Textur (T) gebildet wird, die aus dem Bedienbereich (14) abgeleitet wird.

8. Verfahren nach Anspruch 7, **dadurch gekennzeichnet, dass** auf der Bedienoberfläche (11) mindestens zwei voneinander beabstandete Bedienbereiche (14) definiert werden, wobei aus jedem der mindestens beiden Bedienbereiche (14) eine unterschiedliche Textur (T) abgeleitet wird.

9. Computerprogrammprodukt, aufweisend Programmteile zum Ausführen eines Verfahrens nach mindestens einem der vöranstehenden Ansprüche 1 bis 8.

10. Elektronisches Gerät (100), insbesondere ein Smartphone, ein Tablet-PC oder ein Navigationsgerät, wobei das elektronische Gerät (100) wenigstens einen Prozessor (10) zur Datenverarbeitung und eine berührungsempfindliche Bedienoberfläche (11) aufweist, wobei das Gerät (100) ferner eine Vibrationseinrichtung (12) zur Erzeugung einer Vibration aufweist, und wobei die Bedienoberfläche (11) mit einer Abtasteinrichtung zur Erzeugung eines Abtastsignals in Abhängigkeit einer Position einer Berührung auf der Bedienoberfläche (11) ausgebildet ist, **dadurch gekennzeichnet, dass** das elektronisches Gerät (100) zur Ausführung eines Verfahrens zur taktilen Interaktion eines Benutzers mit dem elektronischen Gerät (100) gemäß einem Verfahren nach einem der Ansprüche 1 bis 8 ausgebildet ist.

## Claims

1. Method for tactile interaction between a user and an electronic device (100), for example a smartphone or a tablet PC, having at least one processor (10) for data processing and having a touch-sensitive user interface (11), wherein the device (100) has a vibration device (12) for producing a vibration, and wherein the user interface (11) is designed to have a scanning device for generating a scan signal on the basis of a position of a touch on the user interface (11), wherein
a vibration is produced at least in the user interface (11) on the basis of a speed of a change of position of the touch on the user interface (11), wherein the speed of the change of position of the touch on the user interface (11) is detected by virtue of a first position (P1) being determined at a first time (T1) and a second position (P2) being determined at a second time (T2) by means of the scanning device to generate the scan signal,
**characterized in that** an ascertained value for the speed of the change of position is multiplied by a prescribed factor and is then converted into an interval duration by forming the reciprocal, wherein
the timing between the first time (T1) and the second time (T2) is 10 milliseconds to 30 milliseconds, preferably 15 milliseconds to 25 milliseconds and particularly preferably 20 milliseconds.

2. Method according to Claim 1, **characterized in that** the period between the times (T1, T2) is formed by a scanning time constant, so that a position (P1, P2) is ascertained at fixed times (T1, T2) and is assigned to these times.

3. Method according to Claim 1 or 2, **characterized in that** the electronic device (100) has an electronic memory (15), wherein at least one position (P1, P2) is stored in the memory (15) at a time (T1, T2).

4. Method according to one of the preceding claims, **characterized in that** the frequency of the vibration is altered on the basis of the speed of the change of position of the touch.

5. Method according to one of the preceding claims, **characterized in that** at least one control area (14) is defined on the user interface (11), for example a button, a graphic, a pattern or the like, wherein the vibration is produced on the basis of the at least one control area (14).

6. Method according to Claim 5, **characterized in that** the vibration is produced only if the user changes the position of the touch on the user interface (11) within the at least one control area (14).

7. Method according to either of Claims 5 and 6, **characterized in that** the vibration pulses (13) form a tactilely perceptible virtual texture (T) that is derived from the control area (14).

8. Method according to Claim 7, **characterized in that** at least two control areas (14) at a distance from one another are defined on the user interface (11), wherein a different texture (T) is derived from each of the at least two control areas (14).

9. Computer program product having program parts for carrying out a method according to at least one of the preceding Claims 1 to 8.

10. Electronic device (100), in particular a smartphone, a tablet PC or a navigation appliance, wherein the electronic device (100) has at least one processor (10) for data processing and a touch-sensitive user interface (11), wherein the device (100) also has a vibration device (12) for producing a vibration, and wherein the user interface (11) is designed to have a scanning device for generating a scan signal on the basis of a position of a touch on the user interface (11), **characterized in that** the electronic device (100) is designed to carry out a method for tactile interaction between a user and the electronic device (100) using a method according to one of Claims 1 to 8.

## Revendications

1. Procédé d'interaction tactile d'un utilisateur avec un appareil électronique (100), par exemple un Smartphone ou une tablette PC, possédant au moins un processeur (10) destiné au traitement de données et possédant une interface utilisateur (11) tactile, l'appareil (100) possédant un dispositif vibrant (12) destiné à générer une vibration, et l'interface utilisateur (11) étant configurée avec un dispositif de palpage destiné à générer un signal de palpage en fonction d'une position d'un toucher sur l'interface utilisateur (11),
une vibration étant générée au moins dans l'interface utilisateur (11) en fonction d'une vitesse d'un changement de position du toucher sur l'interface utilisateur (11), la vitesse du changement de position du toucher sur l'interface utilisateur (11) étant détectée par le fait qu'une première position (P1) à un premier instant (T1) et une deuxième position (P2) à un deuxième instant (T2) sont déterminées avec le dispositif de palpage en générant le signal de palpage,
**caractérisé en ce qu'**une valeur déterminée pour la vitesse du changement de position est multipliée par un facteur prédéfini et ensuite convertie en une durée d'intervalle par calcul de l'inverse,
le cadencement entre le premier instant (T1) et le deuxième instant (T2) étant de 10 millisecondes à 30 millisecondes, de préférence de 15 millisecondes à 25 millisecondes et notamment de préférence de 20 millisecondes.

2. Procédé selon la revendication 1, **caractérisé en ce que** la durée entre les instants (T1, T2) est formée par une constante de temps de palpage, de sorte qu'une position (P1, P2) est déterminée à des instants (T1, T2) fixes et associée à ces instants.

3. Procédé selon la revendication 1 ou 2, **caractérisé en ce que** l'appareil électronique (100) possède une mémoire électronique (15), au moins une position (P1, P2) étant enregistrée dans la mémoire (15) à un instant (T1, T2) .

4. Procédé selon l'une des revendications précédentes, **caractérisé en ce que** la fréquence de vibration est modifiée en fonction de la vitesse du changement de position du toucher.

5. Procédé selon l'une des revendications précédentes, **caractérisé en ce qu'**au moins une zone d'opération (14) est définie sur l'interface utilisateur (11), par exemple un bouton, un symbole graphique, un modèle ou similaire, la vibration étant générée en fonction de l'au moins une zone d'opération (14).

6. Procédé selon la revendication 5, **caractérisé en ce que** la vibration n'est générée que dans le cas où l'utilisateur modifie la position du toucher sur l'interface utilisateur (11) à l'intérieur de l'au moins une zone d'opération (14).

7. Procédé selon l'une des revendications 5 et 6, **caractérisé en ce qu'**une texture (T) virtuelle perceptible de manière tactile est formée par les impulsions de vibration (13), laquelle est dérivée de la zone d'opération (14).

8. Procédé selon la revendication 7, **caractérisé en ce qu'**au moins deux zones d'opération (14) espacées l'une de l'autre sont définies sur l'interface utilisateur (11), une texture (T) différente étant dérivée de chacune des au moins deux zones d'opération (14).

9. Produit de programme informatique, comprenant des parties de programme destinées à mettre en œuvre un procédé selon au moins l'une des revendications 1 à 8.

10. Appareil électronique (100), notamment un Smartphone ou une tablette PC ou un appareil de navigation, l'appareil électronique (100) possédant au moins un processeur (10) destiné au traitement de données et une interface utilisateur (11) tactile, l'appareil (100) possédant en outre un dispositif vibrant (12) destiné à générer une vibration, et l'interface utilisateur (11) étant configurée avec un dispositif de palpage destiné à générer un signal de palpage en fonction d'une position d'un toucher sur l'interface utilisateur (11), **caractérisé en ce que** l'appareil électronique (100) est configuré pour mettre en œuvre un procédé d'interaction tactile d'un utilisateur avec l'appareil électronique (100) selon l'une des revendications 1 à 8.
